Europäisches Patentamt

**European Patent Office**

Office européen des brevets

(11) Veröffentlichungsnummer: **0 246 417 B1**

# EUROPÄISCHE PATENTSCHRIFT

(45) Veröffentlichungstag der Patentschrift:
**12.09.90**

(51) Int. Cl.⁵: **B27B 9/02**

(21) Anmeldenummer: **87104062.2**

(22) Anmeldetag: **19.03.87**

(54) **Für Trennarbeiten verwendbare Handwerkzeugmaschine wie Handkreissäge, Trennschleifgerät od.dgl.**

(30) Priorität: **10.05.86 DE 3615848**

(43) Veröffentlichungstag der Anmeldung:
**25.11.87 Patentblatt 87/48**

(45) Bekanntmachung des Hinweises auf die Patenterteilung:
**12.09.90 Patentblatt 90/37**

(84) Benannte Vertragsstaaten:
**AT BE CH DE ES FR GB IT LI NL**

(56) Entgegenhaltungen:
**DE-A- 3 243 564**
**DE-A- 3 429 095**
**DE-C- 743 056**

**Prospekt der Firma Festo,**
**Elektrowerkzeuge 3/86 (055132D)**

(73) Patentinhaber: **Festo KG, Ulmer Strasse 48,**
**D-7300 Esslingen a.N.(DE)**

(72) Erfinder: **Maier, Peter, Dipl.-Ing.(FH), Gerokstrasse 1,**
**D-7311 Neidlingen(DE)**
Erfinder: **Sigel, Albert, Scholderplatz 21,**
**D-7315 Weilheim(DE)**

(74) Vertreter: **Reimold, Otto, Dr. Dipl.-Phys. et al,**
**Patentanwälte Dipl.-Ing. R. Magenbauer Dipl.-Phys. Dr.**
**O. Reimold Dipl.-Phys.Dr. H. Vetter Hölderlinweg 58,**
**D-7300 Esslingen(DE)**

**Beschreibung**

Die Erfindung betrifft eine für Trennarbeiten verwendbare, motorgetriebene Handwerkzeugmaschine wie Handkreissäge, Trennschleifgerät od.dgl., mit einer Anlageplatte, deren eine Anlagefläche bildende Unterseite an eine zwischen dem Werkstück und der Anlageplatte befindliche Unterlage, insbesondere eine auf das Werkstück aufzulegende Führungsschiene zum geführten Bewegen der Maschine oder eine die Maschine in umgekehrter Lage tragende Tischplatte anlegbar ist, und mit einer das bei an die Unterlage angelegter Anlageplatte an einer Unterlagenlängskante vorbei verlaufende, scheibenförmige Trennwerkzeug enthaltenden Arbeitseinheit, die zum Ausführen von Schräg- bzw. Gehrungsschnitten um eine parallel zur Vorschubrichtung verlaufende Schwenkachse schwenkbar und in der jeweiligen Schwenklage feststellbar mit der Anlageplatte verbunden ist.

Bei den Handkreissägen AP68E und AP88E gemäß dem Prospekt Elektrowerkzeuge 3/86 (055132D) der Anmelderin (Festo KG) ist die Arbeitseinheit mit Hilfe einer Kreisbogenführung an der Anlageplatte angelenkt, und zwar so, daß die nicht körperliche Schwenkachse in der unterseitigen Anlagefläche der Anlageplatte und dabei durch die Werkzeug-Mittelebene verläuft. Dies ergibt, befindet sich zwischen dem Werkstück und der Anlageplatte eine Unterlage, einen nicht unbeträchtlichen Abstand zwischen der Schwenkachse und der Werkstückoberfläche. Dies ist in verschiedener Hinsicht nachteilig:

Verschwenkt man die Arbeitseinheit zum Ausführen eines Schräg- oder Gehrungsschnittes aus der Geradschnittlage, in der die Werkzeugebene rechtwinkelig zur Werkstückoberfläche steht, verlagert sich die Werkzeugeingriffslinie, entlang der das Werkzeug in das Werkstück eingreift, mit zunehmendem Schwenkwinkel in Richtung auf die zugewandte Längskante der Unterlage hin, was ein Nachjustieren der Maschinenlage oder der Werkstücklage erforderlich macht, damit die Werkzeugeingriffslinie mit der Bearbeitungs-Sollinie übereinstimmt.

Ferner muß die Unterlage einen das seitliche Verlagern der Werkzeugeingriffslinie zulassenden Abstand zum Werkzeug besitzen, da sonst bei verschwenkter Arbeitseinheit das Werkzeug mit der Unterlage kollidiert. Dies ist vor allem dann von Nachteil, wenn man eine Führungsschiene beispielsweise gemäß der DE-OS 3 243 564 verwendet. Diese Führungsschiene wird mit ihrer Längskante bzw. mit einer hier angeordneten Gummilippe der der Geradschnittlage entsprechenden Bearbeitungs-Sollinie entlang auf das Werkstück aufgelegt, so daß diese Längskante bzw. die Gummilippe bei schräg gestelltem Werkzeug beschädigt werden würde.

Der vorliegenden Erfindung liegt deshalb die Aufgabe zugrunde, eine Handwerkzeugmaschine der oben genannten Art zu schaffen, die im auf der Unterlage liegenden Zustand ohne Nachjustieren der Maschine oder des Werkstücks sowohl Geradschnitte als auch Schrägschnitte entlang einer vorgegebenen Bearbeitungs-Sollinie ermöglicht, und zwar ohne daß die Unterlage beschädigt wird, auch wenn sie bis zur Bearbeitungs-Sollinie reicht.

Diese Aufgabe wird erfindungsgemäß dadurch gelöst, daß die Schwenkachse bei an die Unterlage angelegter Anlageplatte mit einem der Dicke der Unterlage entsprechenden Abstand zur Anlagefläche der Anlageplatte angeordnet und in Vorschubrichtung gesehen mit Bezug auf die Werkzeug-Mittelebene zur zugewandten Unterlagen-Längskante hin versetzt ist.

Hiermit wird erreicht, daß die Werkzeugeingriffslinie in jeder Schwenkstellung des Trennwerkzeugs ihre Lage bezüglich dem Werkstück beibehält und nicht seitlich abwandert, so daß bei justierter Maschine und anschließender Änderung des Werkzeugschnittwinkels keinerlei Nachjustierungen mehr durchzuführen sind. Aufgrund des Versetzens der Schwenkachse zur zugewandten Unterlagen-Längskante hin schwenkt das Werkzeug sozusagen um diese herum, so daß diese Längskante auch bei verschwenkter Arbeitseinheit unbeschädigt bleibt.

Besonders vorteilhaft ist es dabei, daß die Schwenkachse in der zur Werkzeug-Mittelebene parallelen Ebene der der Unterlage zugewandten Werkzeug-Innenoberfläche verläuft. Die Führungsschiene kann dann mit ihrer Längskante bzw. der Gummilippe od.dgl. ganz exakt auf die Bearbeitungs-Sollinie gelegt werden.

Mit der Weiterbildung nach Anspruch 3 erhält man ohne körperliche Schwenkachse eine exakt arbeitende, stabile Schwenkführung, über die die Arbeitseinheit aufgehängt ist.

Die Weiterbildung nach Anspruch 5 gewährleistet eine besonders präzise Führung der zu verschwenkenden Bauteile, dies insbesondere bei der Ausführung des Führungsfortsatzes in Gestalt eines Bogenteils, da hier die beiden Lagerteile flächig ineinandergreifen können.

Die Weiterbildungen nach den Ansprüchen 7 bis 9 sorgen dafür, daß bei jeder gewählten Schnittiefe des Brennwerkzeugs die Funktionsfähigkeit der Kreisbogenführung erhalten bleibt. Die Weiterbildung nach Anspruch 10 erleichtert die Montage der Kreisbogenführung, was insbesondere bei Nachrüstungen älterer Maschinen von Vorteil ist.

Nachfolgend wird die Erfindung anhand der beiliegenden Zeichnung näher erläutert. In dieser zeigen:

Fig. 1 eine erste Bauform der erfindungsgemäßen Handwerkzeugmaschine in Vorderansicht und in einer für einen Geradschnitt geeigneten Einstellung der Arbeitseinheit,

Fig. 2 die Handwerkzeugmaschine nach Fig. 1 bei geschwenkter Arbeitseinheit zur Durchführung eines Schräg- bzw. Gehrungsschnittes,

Fig. 3 die Handwerkzeugmaschine aus Fig. 1 gemäß der Schnittlinie III-III aus Fig. 1, wobei oberhalb der Schnittebene gelegene Teile gestrichelt angedeutet sind,

Fig. 4 einen Schnitt durch eine der Kreisbogenführungen gemäß Schnittlinie IV-IV aus Fig. 3, wobei nur wesentliche Bauteile abgebildet sind, insbesondere eines der Lagerteile,

Fig. 5 einen Schnitt durch die Kreisbogenführung gemäß Schnittline V-V in Fig. 3, wobei insbesondere eines der Lagerteile abgebildet ist,

Fig. 6 ein an der Antriebseinheit angeordnetes Lagerteil in vergrößerter, perspektivischer Einzeldarstellung und in einer besonders vorteilhaften Ausführungsform und

Fig. 7 die erfindungsgemäße Handwerkzeugmaschine bei einer Verwendung als Stationärmaschine im an einen Maschinentisch angesetzten Zustand.

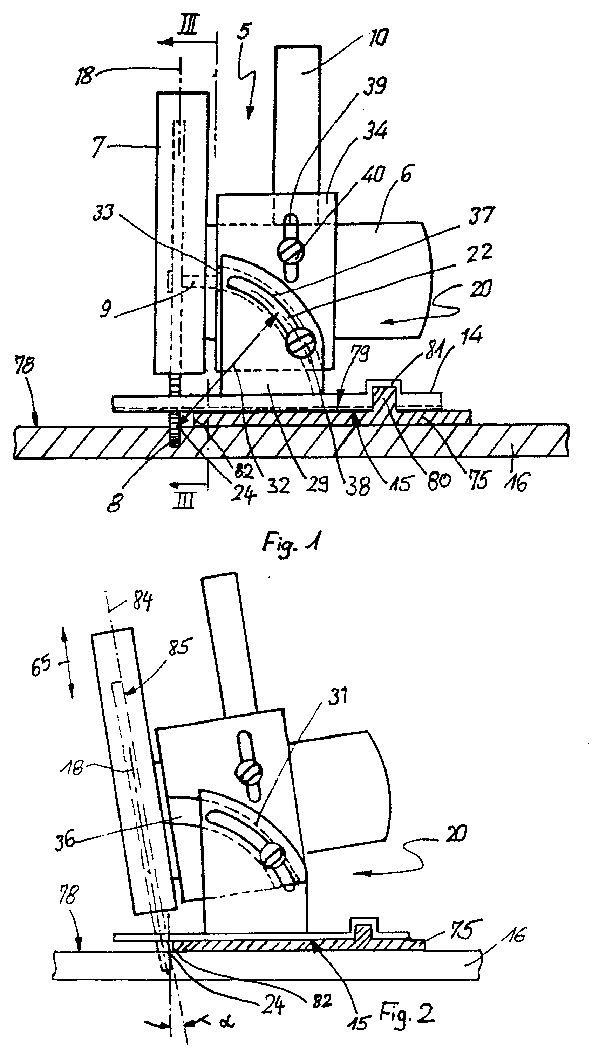

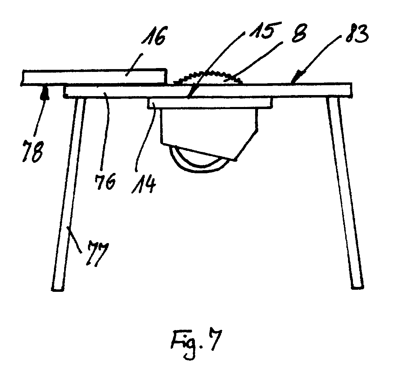

Bei der in der Zeichnung dargestellten Handwerkzeugmaschine handelt es sich um eine Handkreissäge. Sie besitzt, wie vor allem die Fig. 1 bis 3 zeigen, eine Arbeitseinheit 5, die u.a. ein scheibenförmiges, als Sägeblatt ausgebildetes Trennwerkzeug 8 sowie einen in einem Motorengehäuse 6 angeordneten, in der Zeichnung nicht näher dargestellten Antriebsmotor enthält, der mit dem Trennwerkzeug über eine bezüglich diesem koaxial angeordnete Antriebswelle fest verbunden ist. Die Arbeitseinheit 5 ist von einer Anlageplatte 14 getragen, an deren Oberseite sie angeordnet ist, und deren Unterseite eine im wesentlichen ebene Anlagefläche 15 bildet. Mit dieser ist sie an eine Unterlage anlegbar, die bei dem in den Fig. 1 bis 3 beschriebenen Ausführungsbeispiel eine auf einem Werkstück 16 auflegbare Führungsschiene 75 ist und beim Ausführungsbeispiel nach Fig. 7 die Unterseite der Tischplatte 76 eines als Sägetisch ausgebildeten Maschinentisches 77. Das Trennwerkzeug 8 kann durch einen Schlitz der Anlageplatte 14 hindurchgreifen, so daß es mit einer kreissegmentartigen Sägepartie 17 über die Anlagefläche 15 in Richtung zum Werkstück vorsteht.

Während eines Bearbeitungsvorganges wird das Trennwerkzeug 8 gemäß Pfeil 11 in Rotation um seine Längsachse 9 versetzt und gleichzeitig findet eine Relativverschiebung zwischen Säge und Werkstück statt, so daß der in Werkstückeingriff stehende Abschnitt der Sägepartie 17 einen Materialabtrag vornimmt. Die Vorschubrichtung 19 verläuft in Richtung der Schnittlinie zwischen der Werkzeugebene 18, die in den Figuren durch die Werkzeug-Mittelebene repräsentiert wird, und der Ebene der Anlagefläche 15.

Die Arbeitseinheit 5 enthält einen vorzugsweise am Motorengehäuse 6 angebrachten Bedien- und Führungshandgriff 10. Ferner ist eine mit dem Motorengehäuse 6 verbundene Sägeschutzhaube vorhanden, die den größten Teil der oberhalb der Anlageplatte 14, d.h. an der der Anlagefläche 15 entgegengesetzten Plattenseite angeordneten Sägeblattpartie zum Schutz von Späneflug abdeckt.

In den Figuren sind häufige Einsatzgebiete der erfindungsgemäßen Handwerkzeugmaschine abgebildet, bei denen die Anlagefläche 15 jeweils der Werkstückoberfläche 78 mit Abstand gegenüberliegt. Gemäß Fig. 1 und 2 ist auf die Oberfläche des zu bearbeitenden Werkstückes eine leistenförmige, sich linear erstreckende Führungsschiene 75 aufgelegt, deren vom Werkstück wegweisende Oberseite eine im wesentlichen ebene Gleitfläche 79 bildet, die lediglich von einer sich in Schinenlängsrichtung erstreckenden, die Gleitfläche überragenden Führungsrippe 80 unterbrochen ist. Die Anlageplatte 14 liegt mit einer Partie ihrer Anlagefläche 15 auf der Gleitfläche 79 auf, wobei eine in die Platte 14 integrierte Führungseinrichtung in Gestalt einer im wesentlichen komplementär zur Rippe 80 ausgebildeten Führungsausnehmung 81 an die Rippe 80 mit Gleitspiel angesetzt ist. Die Maschine läßt sich dadurch zur Erzielung präziser Sägeschnitte an der Führungsschiene entlang geführt verschieben, wobei der die Gleitfläche überdeckende Abschnitt der Anlagefläche 15 auf der Gleitfläche entlanggleitet. Das Trennwerkzeug 8 befindet sich in Vorschubrichtung gesehen seitlich mit geringem Abstand neben einer der Schienenlängskanten 82. Beim Ausführungsbeispiel nach Fig. 7 sitzt die Anlageplatte 14 mit ihrer Anlagefläche 15 von unter her lösbar an der Tischplatte 76 und das Werkstück 8 durchdringt die Tischplatte nach oben hin, so daß ein Werkstück 16 durch Verschieben auf der Tischoberseite 83 in Werkzeugeingriff bringbar ist.

Alle Ausführungsbeispiele haben gemeinsam, daß die Anlagefläche 15 im Betrieb der Maschine mit Abstand zur Oberfläche 78 des zu bearbeitenden Werkstückes 16 angeordnet ist.

Die Arbeitseinheit 5 ist an der der Anlagefläche 15 entgegengesetzten Oberseite der Anlageplatte 14 an zwei in Vorschubrichtung 19 (der Maschine oder des Werkstücks mit Abstand zueinander angeordneten Lagerstellen 20, 21 gelagert, so daß es möglich ist, die gesamte Arbeitseinheit 5 und insbesondere das Trennwerkzeug 8 gegenüber der Anlageplatte zu verschwenken und damit sowohl Geradschnitte als auch Schräg- bzw. Gehrungsschnitte durchzuführen. Die Achse 24 für diese Schwenkbewegung verläuft parallel zur Ebene der Anlagefläche und parallel zur Werkzeugebene 18 - beim Ausführungsbeispiel durch die Werkzeug-Mittelebene präsentiert - und der wesentliche Gesichtspunkt hierbei ist, daß die Schwenkachse 24 zusätzlich mit Abstand unterhalb der Anlagefläche 15 verläuft bzw. unter diese verlegbar ist - bei aufrecht stehender Maschine betrachtet, d. h. bei oberhalb der Anlageplatte angeordneter Arbeitseinheit - . Der Abstand ist dabei so gewählt, daß die Schwenkachse 24 in der zugewandten Werkstückoberfläche 78 zu liegen kommt, und er entspricht damit beim Ausführungsbeispiel nach den Fig. 1 bis 3 der Dicke der Führungsschiene 75 im Bereich der Gleitfläche 79 und beim Ausführungsbeispiel nach Fig. 7 der Dicke der Tischplatte 76 im Anlagebereich der Anlageplatte 14.

Damit ist gewährleistet, daß die durch den Schnitt der Werkzeugebene 18 mit der Werkstückoberfläche 78 gegebene Werkzeugeingriffslinie, mit der ja nun die Schwenkachse 24 zusammenfällt, sowohl bei rechtwinkeliger als auch bei beliebig verschwenkter Position des Trennwerkzeuges 8 bezüglich der Anlageplatte 14, ihre Lage bezüglich dem Werkstück 16 oder einer dort vorgesehenen Bearbeitungs-Soll-Linie nicht ändert. Eine Nachkorrektur der Maschinenlage, wie sie beispielsweise bei mit Abstand zur Werkstückoberfläche angeordneter Schwenkachse erforderlich wäre, muß nicht durchgeführt werden, was hinsichtlich des Bedienungskomforts positiv zu Buche schlägt. Zum Vergleich sei auf die Fig. 1 und 2 verwiesen, die klar erkennen lassen, daß die Schwenkachse 24 sowohl bei einer Geradschnitt- als auch bei einer Schrägschnitteinstellung der Handwerkzeugmaschine immer ihre Lage an derselben Stelle mit Bezug auf die Anlagefläche 15 beibehält.

Beim Ausführungsbeispiel nach den Fig. 1 und 2 tritt noch eine Besonderheit zutage, denn hier ist die Schwenkachse 24 in Vorschubrichtung 19 gesehen mit Bezug auf die Ebene 18 zur zugewandten Schienenlängskante 82 hin versetzt angeordnet und verläuft in der zur Werkzeug-Mittelebene 18 parallelen Ebene 84 der der Führungsschiene 75 zugewandten Werkzeug-Innenoberfläche 85. Dadurch wird vermieden, daß das Trennwerkzeug beim Verschwenken die Schienenkante berührt, so daß Beschädigungen ausgeschlossen sind.

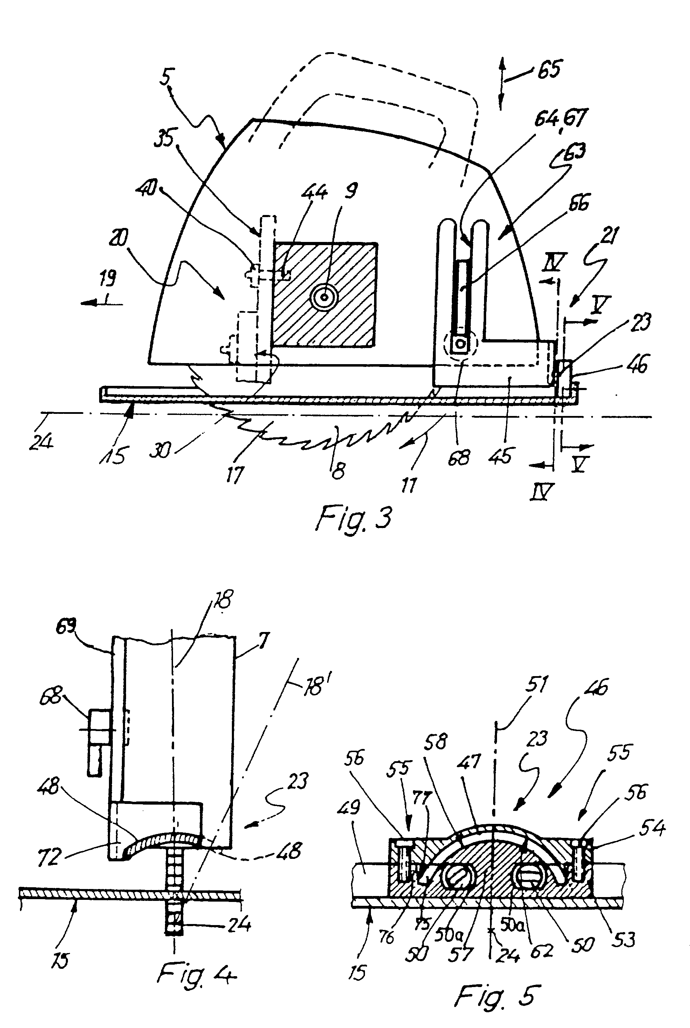

In den Fig. 3 bis 5, die Ansichten der Maschine gemäß den Fig. 1 und 2 repräsentieren, wurde die Lage der Schwenkachse 24 zur Verdeutlichung des Unterschiedes in der Werkzeug-Mittelebene 18 verlaufend eingezeichnet.

Bei einem nicht dargestellten Ausführungsbeispiel besteht die Möglichkeit, die Größe des Abstandes zwischen der Anlagefläche 15 und der Schwenkachse 24 stufenlos zu verstellen und der Dicke der jeweiligen Unterlage entsprechend einzustellen. Hingegen ist der Abstand bei den abgebildeten Ausführungsbeispielen fest vorgegeben und bestimmt sich zum einen nach den Abmessungen der Führungsschiene und zum anderen nach den Abmessungen des Maschinentisches.

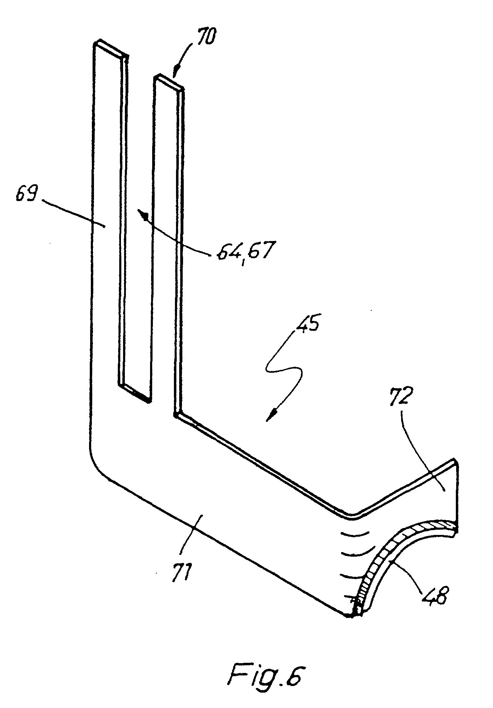

Da das Anbringen einer körperlichen Schwenkachse unterhalb der Anlagefläche 15, d.h. auf der der Arbeitseinheit 5 entgegengesetzten Anlagenplattenseite nicht möglich ist, ist vorgesehen, daß die beiden Lagerstellen 20, 21 jeweils eine Kreisbogenführung 22, 23 enthalten, deren beider Mittelpunkt auf der Schwenkachse 24 liegt (siehe Fig. 4 und 5). Beide Lagerstellen enthalten jeweils ein mit der Arbeitseinheit 5 in fester Verbindung stehendes erstes Lagerteil, sowie ein mit der Anlageplatte 14 in fester Verbindung stehendes zweites Lagerteil, wobei beide Lagerteile einer jeden Lagerstelle jeweils entlang einem Kreisbogen miteinander in Eingriff stehen und wobei die miteinander in Eingriff stehenden Lagerteile-Partien in Bogenrichtung gesehen unterschiedliche Länge aufweisen.

Beim vorliegenden Ausführungsbeispiel ist die Maschinenanordnung so getroffen, daß das von der Schutzhaube 7 teilweise abgedeckte Trennwerkzeug 8 einem der beiden längsseitigen Bereiche der im wesentlichen rechteckigen Anlageplatte 14 zugeordnet ist, während sich das Motorengehäuse 6 ausgehend von der Schutzhaube 7 quer zur Vorschubrichtung mit Abstand oberhalb der Plattenoberseite hin zur gegenüberliegenden Plattenlängsseite erstreckt, der auch die Führungseinrichtung zugeordnet ist.

Die erste Lagerstelle 20 ist dem vorderen Anlagenplattenbereich zugeordnet und befindet sich seitlich neben der Schutzhaube 7 und vor dem Motorengehäuse 6. Sie besitzt eine an der Oberseite der Anlageplatte 14 befestigte und mit ihrer Plattenebene rechtwinklig bezüglich der Vorschubrichtung 19 und neben dem Trennwerkzeug 8 angeordnete Lagerplatte 29, die etwa bis zur Höhe des Motorengehäuses 6 emporragt, und in deren dem Motorengehäuse 6 zugewandte Rückseite 30 eine kreisbogenförmige Oberflächennut 31 eingelassen ist. Der Krümmungsmittelpunkt dieser Nut 31 liegt, wie durch den Pfeil 32 in Fig. 1 angedeutet ist, genau auf der bereits erwähnten Schwenkachse 24, und die Nut liegt in einer rechtwinkelig zur Vorschubrichtung angeordneten Ebene.

Beim Ausführungsbeispiel entspricht die Bogenlänge in etwa derjenigen eines Viertelkreises und das eine axiale Nutende 33 ist der zum Trennwerkzeug 8 hingewandten Längsseite der Lagerplatte 29 zugeordnet und im übrigen offen.

Zwischen der Lagerplatte 29 und dem Motorengehäuse 6 ist eine mit letzterem fest verbundene Führungs platte 34 angeordnet, deren Plattenebene parallel zur Ebene der Lagerplatte 29 verläuft und die mit ihrer der Lagerplatte 29 zugewandten Vorderseite 35 an der Rückseite 30 der Lagerplatte 29 flächig anliegt.

Die Führungsplatte 34 überdeckt die zugewandte Oberflächennut 31 zumindest in der in Fig. 1 dargestellten und für einen Geradschnitt geeigneten Stellung der Arbeitseinheit 5 im wesentlichen vollständig, wobei ein an der Vorderseite 35 fest angeordneter und insbesondere einstückig angeformter, komplementär zur Oberflächennut 31 ausgebildeter, kreisbogenförmiger Vorsprung 36 mit Gleitspiel in die Oberflächennut 31 eintaucht. Der Krümmungsmittelpunkt des Vorsprunges 36 liegt ebenfalls auf der Schwenkachse 24.

Des weiteren ist die Lagerplatte 29 im Bereich der Oberflächennut 31 von einem kreisbogenförmigen Längsschlitz 37 durchdrungen, der in etwa mittig bezüglich der Oberflächennut 31 angeordnet ist, der jedoch eine geringere Breite und eine geringere Länge als diese Nut aufweist. Seine Krümmung entspricht der Nutkrümmung. Durch diesen Längsschlitz 37 hindurch erstreckt sich ein und der Führungsplatte 34 befestigter Gewindebolzen (nicht näher dargestellt) auf dessen über die Vorderseite der Lagerplatte 29 überstehenden Gewindeabschnitt ein Drehknopf 38 zum lösbaren Festklemmen der beiden Platten 29, 34 gegeneinander aufgeschraubt ist. Der Gewindebolzen bzw. der Drehknopf 38 befindet sich in der in Fig. 1 dargestellten Geradschnitt-Einstellung der Arbeitseinheit 5 im vom Trennwerkzeug 8 wegweisenden Längsendbereich des Längsschlitzes 37.

Zur Durchführung von Schräg- bzw. Gehrungsschnitten ist ausgehend von der in Fig. 1 abgebildeten Einstellung der Maschine zunächst der Drehknopf 38 leicht zu lösen, anschließend die Arbeitseinheit 5 gegenüber der Anlageplatte 14 zu verschwenken, wobei der Vorsprung 36 in der Oberflächennut 31 entlanggleitet - der Vorsprung 36 fährt hierbei im Bereich des Nutendes 33 aus der Oberflächennut 31 aus (siehe Fig. 2) -, und wenn der gewünschte Schwenkwinkel erreicht ist, wird der Drehknopf festgezogen, wodurch die beiden Platten 29, 34 und damit die Arbeitseinheit 5 gegenüber der Anlageplatte 14 festgelegt ist. Der maximale Schwenkwinkel ist durch die Länge des Längsschlitzes 37 definiert.

Um bei der erfindungsgemäßen Handwerkzeugmaschine auch auf einfache Weise die jeweils gewünschte Säge- bzw. Trenntiefe einstellen zu können, ist die Arbeitseinheit 5 zusätzlich höhenverschieblich gegenüber der Anlageplatte 14 angebracht. Zu diesem Zwecke ist bezugnehmend auf die erste, vordere Lagerstelle 20 die Arbeitseinheit 5 gegenüber der Führungsplatte 34 parallel zur Werkzeugebene 18 und in Höhenrichtung verstellbar angebracht. Dabei besitzt die Führungsplatte 34 eine sie durchquerende Längsnut 39, durch die ein an der Arbeitseinheit 5 festgelegter Gewindebolzen 44 hindurchgeführt und auf dessen überstehendes Ende ein Drehknopf 40 aufgeschraubt ist. Durch Lösen des Drehknopfes kann dabei eine Höhenjustierung erfolgen, wobei der Gewindebolzen in der Längsnut 39 entlanggleitet, und wenn die gewünschte Sägetiefe erreicht ist, ist die Führungsplatte 34 durch Festziehen des Drehknopfes 40 fest mit der Arbeitseinheit 5 verbindbar.

Die dem hinteren Maschinenende zugeordnete zweite Lagerstelle 21 ist vorzugsweise in Sägerichtung gesehen hinter dem Trennwerkzeug 8 angeordnet. Sie besitzt zwei Lagerteile 45, 46, die entlang einem Kreisbogen miteinander in Eingriff stehen. Dabei besitzt eines der Lagerteile, beim Ausführungsbeispiel das an der Anlageplatte 14 angebrachte zweite Lagerteil, eine nutartige, kreisbogenförmig ausgebildete und in einer quer zur Vorschubrichtung 19 verlaufende Ebene angeordnete Führungsvertiefung 47 (siehe Fig. 5) in die ein am ersten Lagerteil angeordneter Führungsfortsatz 48 (siehe Fig. 4) eingreift, wobei der Führungsfortsatz 48 und die Führungsvertiefung 47 in Bogenrichtung, d.h. in Längsrichtung der Führungsvertiefung 47, einander gegenüber verschiebbar sind. Ferner besitzen die beiden ineinander eingreifenden Teile 47, 48 in Bogenrichtung gesehen eine unterschiedliche Länge.

Der Führungsfortsatz 48 kann beispielsweise ein in die Führungsvertiefung 47 eintauchender Zapfen sein (nicht dargestellt), besitzt jedoch vorteilhafterweise eine bezüglich der bogenförmigen Führungsvertiefung 47 mit identischer Krümmung versehene bogenförmige Gestalt. Beim Ausführungsbeispiel ist der Führungsfortsatz 48, wie insbesondere aus Fig. 4 und Fig. 6 ersichtlich ist, in Gestalt eines Kreisringsegments bzw. in Gestalt eines sich über eine gewisse Bogenlänge erstreckenden Wandabschnittes eines hohlen Kreiszylinders ausgebildet.

Die quer zur Bogenrichtung gemessenen Breitenabmessungen der Führungsvertiefung 47 und des Führungsfortsatzes 48 sind so aufeinander abgestimmt, daß der Führungsfortsatz mit einer Verschiebung in Bogenlängsrichtung ermöglichendem Gleitspiel in der Führungsvertiefung 47 einsitzt.

Beim Ausührungsbeispiel ist sowohl die Führungsvertiefung 47 als auch der Führungsfortsatz 48 in Vorschubrichtung gesehen hinter dem Trennwerkzeug 8 und hierbei vorzugsweise im wesentlichen vertikal oberhalb der Schwenkachse 24 angeordnet. Ferner befindet sich die Kreisbogenführung 23 in unmittelbarer Nähe der Oberseite der Anlageplatte 14. Dies ermöglicht es, die Kreisbogenführung mit einem relativ geringen Krümmungsradius auszubilden, so daß eine kompakte Bauweise mit nur geringen geometrischen Abmessungen möglich ist. Dies liegt unter anderem auch daran, daß diese zweite Kreis bogenführung 23 in Zusammenhang mit der ersten Kreisbogenführung 22 eine stabile Schwenklagerung für die Arbeitseinheit 5 bildet, die es erlaubt, lediglich an einer der Lagerstellen einen Feststellmechanismus zum Feststellen eines Schwenkwinkels anzuordnen. Die zweite Kreisbogenführung 23 muß also nie arretiert werden, da auch sie von der Stabilität her Eigenschaften aufweist, wie sie vergleichbar nur ein mit lediglich einem Dreh-Freiheitsgrad versehenes Drehgelenk besitzt.

Vorzugsweise ist das zweite der Anlageplatte 14 zugeordnete Lagerteil 46 lösbar an der Oberseite der Anlageplatte 14 befestigt; beim Ausführungsbeispiel ist der umlaufende Rand 49 der Anlageplatte 14 im rechten Winkel nach oben umgebördelt und das Lagerteil 46 ist von innen her mit diesem Rand 49 verschraubt (bei 50), wobei die Lagerteilunterseite zur Lagefixierung auf der Oberfläche der Platte aufliegt. Die bogenförmige Führungsvertiefung ist bezüglich einer mit der Schwenkachse 24 zusammenfallenden und rechtwinkelig bezüglich der Auflagefläche 15 angeordneten Bezugsebene 51 symmetrisch ausgebildet, so daß sie beidseits dieser Bezugsebene die gleiche Bogenlänge aufweist. Die seitlichen Enden der Führungsvertiefung 47 sind der Oberfläche der Anlageplatte 14 benachbart und der Scheitel der kreisbogenförmigen Führungsvertiefung 47 wird von der Bezugsebene 51 geschnitten und liegt mit Abstand oberhalb des Randes 49.

Um das Einsetzen des bogenförmigen Führungsfortsatzes 48 in die Führungsvertiefung 47 zu erleichtern, ist das zweite Lagerteil 46 ferner zweigeteilt ausgeführt und besteht aus einer unteren, unmittelbar an der Anlageplatte 14 befestigten Lagerschale 53, sowie einer von oben her auf diese aufgesetzten und vorzugsweise lösbar mit ihr verschraubten oberen Lagerschale 54. Dabei verläuft die Trennungslinie im wesentlichen entlang der Führungsvertiefung 47; lediglich seitlich der Führungsvertiefung verläuft die Trennebene im wesentlichen parallel zur Auflagefläche 15, in diesem Bereich befinden sich auch Befestigungsaugen 55, die geeignet sind, die beiden Lagerschalen miteinander verschraubende Befestigungsschrauben 46 aufzunehmen.

Stellt man sich die beiden Lagerschalen 53, 54 getrennt voneinander vor, so besitzt die untere Lagerschale 53 einen sich nach oben auswölbenden, höckerartigen Mittelteil 57, der im Querschnitt gesehen die Gestalt eines Kreissegmentes besitzt und dessen kreiszylinder-mantelförmige Außenkontur eine Führungsfläche 58 der Führungsvertiefung 47 bildet. Hingegen besitzt die obere Lagerschale 54 eine, ebenfalls im Querschnitt gesehen, kreissegmentförmige Ausnehmung, deren Begrenzungsfläche die zweite Führungsfläche 62 der Führungsvertiefung bildet, die jedoch einen größeren Krümmungsradius als die erste Führungsfläche 58 aufweist, so daß beide Flächen im zusammengesetzten Zustand der beiden Lagerschalen in Radialrichtung gesehen in einem Abstand zueinander angeordnet sind, der der quer zur Bogenrichtung gemessenen Breite des Führungsfortsatzes 58 entspricht.

Bei der Montage der zweiten Lagerstelle 21 wird folglich zunächst die erste Lagerschale 53 an der Anlageplatte 14 montiert, dann wird der Führungsfortsatz 48 eingesetzt und letztendlich erfolgt das Befestigen der oberen an der unteren Lagerschale.

Zur Gewährleistung der Sägetiefen-Einstellbarkeit ist hinsichtlich der zweiten Lagerstelle 21 vorgesehen, daß das an der Arbeitseinheit 5 angebrachte erste Lagerteil 45 lösbar fest angebracht ist, so daß bei Bedarf ein Lösen der Verbindung erfolgen und unter Beibehaltung der Kreisbogenführung 23 eine Höhenverstellung der Arbeitseinheit 5 durchgeführt werden kann. Hierbei ist das erste Lagerteil 45, gleichzeitig Teil einer linearen Verschiebeführung 63 für die höhenverstellbare Arbeitseinheit, die es erlaubt, daß zumindest das Trennwerkzeug 8 bei jeder Winkellage α parallel zu seiner Werkzeugebene 18 höhenverschieblich ist.

Die Verschiebeführung 63 besitzt eine geradlinige und in Höhenverstellrichtung (Pfeil 65) verlaufende Führungsausnehmung 64, die dem ersten Lagerteil 45 zugeordnet ist, und die mit einem an der höhenverstellbaren Arbeitseinheit angeordneten Führungs vorsprung 66 zusammenarbeitet. Die Anordnungsweise kann auch umgekehrt sein. Die Führungsausnehmung 64 ist beispielsweise eine Nut oder aber, wie beim Ausführungsbeispiel, ein Längsschlitz 67, und der Führungsvorsprung 66 weist eine längliche rippenförmige Gestalt auf, dessen Längsrichtung mit der Höhenverstelrichtung 65 zusammenfällt. Da bei der Maschine des Ausführungsbeispieles auch die Schutzhaube 7 mit höhenverstellbar ist, ist es zweckmäßig, den Vorsprung 66 an dieser anzubringen. Der Vorsprung 66 sitzt vorzugsweise mit Gleitspiel im Längsschlitz 67 ein.

Ferner durchdringt den Längsschlitz 67 vorzugsweise unterhalb des Vorsprunges 66 ein einerseits an der Schutzhaube 7 angebrachter und andererseits mit einem gestrichelt dargestellten Schraubknebel 68 in Verbindung stehender Gewindebolzen, so daß die Arbeitseinheit 5 in der jeweils gewählten Höhenstellung lösbar mit dem Lagerteil 45 kraftschlüssig verspannbar ist.

In Fig. 6 ist in einer Einzelteilzeichnung nochmals das erste Lagerteil 45 der zweiten, hinteren Lagerstelle 21 in besonders zweckmäßiger und einfach herstellbarer Form abgebildet. Man erkennt eine leistenförmige Partie 69, die ausgehend von einem Ende 70 in Längsrichtung verlaufend mittig ein Stück weit geschlitzt ist; dieser Schlitz bildet die Führungsausnehmung 64 der Verschiebeführung. An den dem Ende 70 entgegengesetzten Endbereich der Partie 69 ist eine weitere, ebenfalls im wesentlichen leistenförmige Verbindungspartie 71 einstückig angeformt, wobei die beiden Leistenflächen in einer gemeinsamen Ebene verlaufen und wobei das Lagerteil 45 in der Seitenansicht gemäß Fig. 3 eine L-förmige Gestalt aufweist.

Die der geschlitzten Partie entgegengesetzte Endpartie 72 der Verbindungspartie 71 ist gegenüber dieser im rechten Winkel abgebogen und zwar über dieser im rechten Winkel abgebogen und zwar in Richtung einer der beiden Verbindungspartie-Flächen. Diese Endpartie 72 trägt an ihrer von der geschlitzten Partie 69 wegweisenden Seite den Führungsfortsatz 48.

Im an die Arbeitseinheit 5 montierten Zustand liegt das erste Lagerteil 45 mit seinen beiden Partien 69, 71 seitlich an der Schutzhaube 7 an, wobei die Längsrichtung der Verbindungspartie 71 im wesentlichen parallel zur Vorschubrichtung 19 verläuft und wobei die Endpartie 72 hinter der Schutzhaube 7 verläuft und die Werkzeugebene schneidet.

Der bogenförmige Führungsfortsatz 48 weist eine geringere Bogenlänge auf als die Führungsvertiefung 47, so daß Raum zum Verschieben der beiden Teile gegeneinander verbleibt. Die Bogenlängendifferenz legt hierbei den von der zweiten Lagerstelle 21 maximal zugelassenen Schwenkwinkel fest; zweckmäßigerweise wird man die beiden Kreisbogenführungen so aneinander anpassen, daß sie den gleichen maximalen Schwenkwinkel erlauben.

In Fig. 4 ist in durchgezogenen Linien die Stellung des Führungsfortsatzes 48 bei rechtwinkelig zur Auflagefläche 15 angeordneter Werkzeugebene 18 in durchgezogenen Linien abgebildet, während gestrichelt die von dem Fortsatz bei verschwenkter Werkzeugebene 18' eingenommene Stellung abgebildet ist.

Zweckmäßigerweise wird man im Bereich der ersten, mit einer Feststelleinrichtung versehenen Lagerstelle 20 eine sich entlang des Bogens erstreckende Winkelskala anbringen, um die jeweilige Schwenkwinkelstellung genau ablesen zu können. Um hierbei eine gute Auflösung zu bekommen, ist es vorteilhaft, die erste Kreisbogenführung 22 mit einem größeren krümmungsradius und daher auch mit einer größeren Bogenlänge auszustatten im Vergleich zur zweiten Kreisbogenführung 23.

Anhand der Fig. 5 wird schließlich noch auf folgende zweckmäßige Maßnahmen hingewiesen: wie schon weiter oben beschrieben, ist das Lagerteil 46 an der Anlageplatte 14 lösbar befestigt, so daß man es sozusagen als Zusatzteil fertigen und an bestehenden Anlageplatten anbringen kann. Damit man nun hierbei auftretende Toleranzen ausgleichen und das Lagerteil 46 exakt lagejustieren kann, ist dieses rechwinklig zur Vorschubrichtung verstellbar an der Anlageplatte 14 befestigt. Hierzu greifen beim Ausführungsbeispiel die beiden Schrauben 50, mit denen die untere Lagerschale 53 am hochstehenden Rand 49 der Anlageplatte 14 angebracht ist, jeweils durch ein quer gerichtetes Langloch 50a der der unteren Lagerschale 53.

Des weiteren sind die beiden aufeinander sitzenden Lagerschalen 53, 54 mittels der Befestigungsschrauben 56 miteinander verschraubt. Dabei greifen die beiden Lagerschalen 53, 54 in Richtung der Befestigungsschrauben 56 derart ineinander, daß sich beim Festziehen der Schrauben 56 der Krümmungsradius der Führungsfläche 62 der oberen Lagerschale 54 leicht verändert. Dies dient zur Einstellung des Führungsspiels für den Führungsfortsatz 48. Im einzelnen wird dies dadurch erreicht, daß die untere Lagerschale 53 beiderseits des höckerartigen Mittelteils 57 jeweils eine zur oberen Lagerschale hin offene Ausnehmung 75 mit einer dem Mittelteil 57 abgewandten, schräg nach unten innen hin verlaufenden Klemmwand 76 besitzt und daß von der Unterseite der oberen Lagerschale 54 zwei angeformte zahnartige Vorsprünge 77 vorstehen, die jeweils in eine der Ausnehmungen 75 eingreifen und hierbei mit ihrer zweckmäßigerweise etwas schräg nach unten außen verlaufenden Außenflanke an der zugewandten Klemmwand 76 anliegen. Dabei bilden die Innenflanken der beiden Vorsprünge 77 die Enden der oberen Führungsfläche 62. Auf diese Weise ergibt sich beim Anschrauben der oberen Lagerschale sozusagen ein Keileffekt, indem die beiden zahnartigen Vorsprünge 77 der jeweils zugewadten Klemm wand 76 entlang nach unten rutschen und dabei aufeinander zu gedrückt werden, so daß sich der Verlauf der oberen Führungsfläche 62 entsprechend ändert. Hierzu besteht mindestens die obere Lagerschale 54 aus einem diese elastische Bewegung der Vorsprünge 77 zulassenden Kunststoffmaterial. Bei der Montage kann man die beiden Befestigungsschrauben 56 zunächst so fest anziehen, daß der Führungsfortsatz 48 festsitzt. Anschließend dreht man die Schrauben 56 so weit zurück, daß der Führungsfortsatz 48 spielfrei verschwenkt werden kann.

Es sei darauf hingewiesen, daß die beiden Lagerstellen selbstverständlich auch gleichartig ausgebildet sein können und insbesondere beide die Gestalt der zweiten Lagerstelle 21 aufweisen können.

**Patentansprüche**

1. Für die Trennarbeiten verwendbare, motorgetriebene Handwerkzeugmaschine wie Handkreissäge, Trennschleifgerät od. dgl., mit einer Anlageplatte (14), die mit ihrer eine Anlagefläche (15) bildenden Unterseite an eine zwischen dem Werkstück (16) und der Anlageplatte (14) befindliche Unterlage, insbesondere eine auf das Werkstück (16) aufzulegende Führungsschiene (75) zum geführten Bewegen der Maschine oder eine die Maschine in umgekehrter Lage tragende Tischplatte (76) anlegbar ist, und die im Bereich ihrer Oberseite eine Arbeitseinheit (5) mit einem scheibenförmigen Trennwerkzeug (8) mit quer zur Ebene der Anlagefläche (15) verlaufender Werkzeugebene trägt, wobei die Arbeitseinheit (5) zum Ausführen von Schräg- bzw. Gehrungsschnitten um eine parallel zur Vorschubrichtung (19) verlaufende, nicht körperliche Schwenkachse (24) schwenkbar und in der jeweiligen Schwenklage feststellbar mit der Anlageplatte (14) verbunden ist, dadurch gekennzeichnet, daß die Schwenkachse (24) bei an die Unterlage (75, 76) angelegter Anlageplatte (14) mit einem der Dicke der Unterlage (75, 76) entsprechenden Abstand zur Anlagefläche (15) der Anlageplatte (14) angeordnet und in Vorschubrichtung (19) gesehen mit Bezug auf die Werkzeug-Mittelebene (18) zur zugewandten Unterlagen-Längskante (82) hin versetzt ist.

2. Handwerkzeugmaschine nach Anspruch 1, dadurch gekennzeichnet, daß die Schwenkachse (24) in der zur Werkzeugmittelebene (18) parallelen Ebene (84) der der Unterlage (75, 76) zugewandten Werkzeug-Innenoberfläche (85) verläuft.

3. Handwerkzeugmaschine nach einem der Ansprüche 1 bis 2, die an zwei in Vorschubrichtung (19) in Abstand zueinander angeordneten Lagerstellen (20, 21) an der Anlageplatte (14) schwenkbar gelagert ist, dadurch gekennzeichnet, daß beide Lagerstellen (20, 21) jeweils eine Kreisbogenführung (22, 23) mit auf der Schwenkachse (24) liegendem Mittelpunkt enthalten.

4. Handwerkzeugmaschine nach Anspruch 3, dadurch gekennzeichnet, daß oberhalb der Anlagefläche (15) an der Anlageplatte (14) und an der Arbeitseinheit (5) für jede Lagerstelle (20, 21) jeweils ein mit dem anderen Lagerteil entlang einem Kreisbogen in Eingriff stehendes Lagerteil fest angeordnet ist, wobei die beiden Lagerteile 31, 36 (45, 46) einer jeden Lagerstelle (20, 21) in Bogenrichtung gesehen unterschiedliche Länge aufweisen.

5. Handwerkzeugmaschine nach Anspruch 4, dadurch gekennzeichnet, daß das jeweils eine Lagerteil (46) eine nutartige, kreisbogenförmig ausgebildete und in einer quer zur Vorschubrichtung (19) verlaufenden Ebene angeordnete Führungsvertiefung (47) aufweist, in die ein zweckmäßigerweise als Zapfen oder als Bogenteil mit identischer Krümmung ausgebildeter Führungsfortsatz (48) des anderen Lagerteils (45) eingreift, wobei der Führungsfortsatz (48) und die Führungsvertiefung (47) einander gegenüber verschiebbar sind.

6. Handwerkzeugmaschine nach Anspruch 4 oder 5, dadurch gekennzeichnet, daß die beiden ineinander eingreifenden Partien (47, 48) der beiden Lagerteile (45, 46) in Vorschubrichtung (19) der Maschine gesehen vor und/oder hinter dem Trennwerkzeug (8) und hierbei insbesondere im wesentlichen vertikal oberhalb der Schwenkachse (24) angeordnet sind.

7. Handwerkzeugmaschine nach einem der Ansprüche 4 bis 6, mit einer gegenüber der Anlageplatte (14) höhenverstellbaren Arbeitseinheit (5) zur Trenntiefeineinstellung, dadurch gekennzeichnet, daß das an der Arbeitseinheit (5) angebrachte Lagerteil (45) der Kreisbogenführung (23) lösbar an der Arbeitseinheit (5) angebracht ist, derart, daß die Arbeitseinheit (5) bei gelöstem Lagerteil (45) gegenüber diesem einer zur Werkzeugebene (18) parallelen Ebene höhenverstellbar ist.

8. Handwerkzeugmaschine nach Anspruch 7, dadurch gekennzeichnet, daß das an der Arbeitseinheit (5) angebrachte Lagerteil (45) gleichzeitig Teil einer linearen Verschiebeführung (63) für die höhenverstellbare Arbeitseinheit (5) ist.

9. Handwerkzeugmaschine nach Anspruch 8, dadurch gekennzeichnet, daß die Verschiebeführung (63) eine am der Arbeitseinheit (5) zugeordnete Lagerteil (45) oder an der Arbeitseinheit (5) angeordnete, geradlinige und in Höhenverstellrichtung (65) verlaufende Führungsausnehmung (64) aufweist, z.B. eine Nut, ein Schlitz od. dgl., in die ein am jeweils anderen Bauteil angeordneter Führungsvorsprung (66) eingreift, wobei die Arbeitseinheit (5) gegenüber dem Lagerteil (45) stufenlos verschieblich und in gewünschten Verschiebestellungen gegenüber diesem lösbar und insbesondere kraftschlüssig festlegbar ist.

10. Handwerkzeugmaschine nach einem der Ansprüche 5 bis 9, dadurch gekennzeichnet, daß die Führungsvertiefung (47) der Kreisbogenführung (23) an dem an der Anlageplatte (14) angeordneten Lagerteil (46) vorgesehen ist, das aus zwei lösbar miteinander verbundenen Lagerschalen (53, 54) besteht, wobei die Führungsvertiefung (47) zwischen den beiden Lagerschalen (53, 54) verläuft.

11. Handwerkzeugmaschine nach einem der Ansprüche 5 bis 9, dadurch gekennzeichnet, daß das an der Arbeitseinheit (5) angeordnete Lagerteil (45) zumindest einer Lagerstelle mit einer ersten Partie (71) in Vorschubrichtung (19) gesehen seitlich des Trennwerkzeugs (8) an der Arbeitseinheit (5) angebracht ist und hierbei insbesondere an der Außenseite einer das Trennwerkzeug (8) abdeckenden Schutzhaube (7), wobei sich diese erste Partie (71) im wesentlichen in bzw. entgegen der Vorschubrichtung (19) erstreckt und wobei ihre die Führungsvertiefung (47) bzw. den Führungsfortsatz (48) tragende (72) bzw. bildende (48) zweite Partie vor bzw. hinter dem Trennwerkzeug bzw. gegebenenfalls der Schutzhaube (7) quer zur Vorschubrichtung (19) abgekröpft ist und die Werkzeugebene (18) schneidet.

12. Handwerkzeugmaschine nach Anspruch 11, dadurch gekennzeichnet, daß die den Führungsvorsprung (66) bzw. die Führungsausnehmung (64) für die Verschiebeführung (63) aufweisende dritte Partie (69) des an der Arbeitseinheit (5) angebrachten Lagerteils (45) am der zweiten Partie (48, 72) entgegengesetzten Ende der ersten Partie (71) des Lagerteils (45) angebracht ist und hierbei nach oben absteht, wobei die erste Partie (71) und die dritte Partie (69) in einer gemeinsamen Ebene und die zweite Partie (48 bzw. 72) in einer hierzu rechtwinkelig angeordneten Ebene verlaufen und wobei sämtliche drei Partien zweckmäßigerweise einstückig miteinander ausgebildet sind.

13. Handwerkzeugmaschine nach einem der Ansprüche 3 bis 12, dadurch gekennzeichnet, daß die Krümmungsradien der Kreisbögen der beiden Kreisbogenführungen (22, 23) unterschiedlich groß sind, wobei zweckmäßigerweise der Kreisbogen der zweiten Kreisbogenführung (23) einen geringeren Radius als derjenige der ersten Kreisbogenführung (22) aufweist.

14. Handwerkzeugmaschine nach einem der Ansprüche 4 bis 13, dadurch gekennzeichnet, daß das an der Anlageplatte (14) angeordnete Lagerteil (46) rechtwinkelig zur Vorschubrichtung (19) verstellbar an der Anlageplatte (14) befestigt ist.

15. Handwerkzeugmaschine nach einem der Ansprüche 4 bis 13, dadurch gekennzeichnet, daß das an der Anlageplatte (14) angeordnete Lagerteil (46) am rechtwinkelig nach oben hochstehenden Rand (49) der Anlageplatte (14) befestigt ist und zweckmäßigerweise hierbei auf der Oberfläche der Anlageplatte (14) aufsteht.

## Claims

1. A motor-driven, manually operated machine tool for use in cutting operations, such as a manual circular saw, abrasive cutter etc., with a support plate (14), which, with its lower side forming a contact face (15), can be put against a support located between the workpiece (16) and the support plate (14), in particular a guide rail (75) to be placed on the workpiece (16) for the guided traverse of the machine, or a table top (76) carrying the machine in the inverted position, and which carries, in the area of its upper side, an operating unit (5) with a disk-shaped cutting tool (8) with a tool plane extending at right angles to the plane of the contact face (15), said operating unit (5) being pivoted on the support plate (14) to be capable of swivelling about a non-physical swivelling axis (24) parallel to the direction of feed (19) and of being locked in the required position for bevel and mitre cutting, characterised in that the swivelling axis (24) is, when the support plate (14) rests against the support (75, 76), located at a distance corresponding to the thickness of the support (75, 76) from the contact face (15) of the support plate (14), and in that it is offset towards the adjacent longitudinal edge (82) of the support relative to the centre plane (18) of the tool if viewed in the direction of feed (19).

2. A manually operated machine tool according to Claim 1, characterised in that the swivelling axis (24) lies in that plane (84) of the tool inner surface (85) adjacent to the support (75, 76) which is parallel to the centre plane (18) of the tool.

3. A manually operated machine tool according to Claim 1 or 2, which is pivoted on the support plate (14) at two supporting points (20, 21) spaced in the direction of feed (19), characterised in that each of the supporting points (20, 21) incorporates a circular arc guide (22, 23), the centre of which lies on the swivelling axis (24).

4. A manually operated machine tool according to Claim 3, characterised in that, for each supporting point (20, 21), a supporting part engaging another supporting part along a circular arc is located above the contact face (15) on the support plate (14) and on the operating unit (5), the two supporting parts (31, 36; 45, 46) of each supporting point (20, 21) being of different lengths if viewed in the direction of the arc.

5. A manually operated machine tool according to Claim 4, characterised in that one supporting part (46) of each pair has a groove-like, circular arc-shaped guide recess (47) arranged in a plane at right angles to the direction of feed (19) for the engagement of a guide projection (48) of the other supporting part (45) suitably designed as a peg or a segment with identical curvature, the guide projection (48) and the guide recess (47) being movable relative to each other.

6. A manually operated machine tool according to Claim 4 or 5, characterised in that the sections (47, 48) of the supporting parts (45, 46) which engage each other are arranged in front and/or behind the cutting tool (8) if viewed in the direction of feed (19) of the machine, in particular substantially vertically above the swivelling axis (24).

7. A manually operated machine tool according to any of Claims 4 to 6, with an operating unit (5) vertically adjustable relative to the support plate (14) for the adjustment of cutting depth, characterised in that that supporting part (45) of the circular arc guide (23) which is mounted on the operating unit (5) is detachably mounted thereon, enabling the operating unit (5) to be vertically adjusted in a plane parallel to the tool plane (18) on detaching the supporting part (45).

8. A manually operated machine tool according to Claim 7, characterised in that the supporting part (45) mounted on the operating unit (5) forms part of a linear traverse guide (63) for the vertically adjustable operating unit (5).

9. A manually operated machine tool according to Claim 8, characterised in that the traverse guide (63) has a straight guide recess (64), such as a groove, a slot etc., located on the supporting part (45) associated with the operating unit (5) or on the operating unit (5) itself and extending in the direction of vertical adjustment for the engagement of a guide projection (66) on the other part, the operating unit (5) being infinitely adjustable relative to the supporting part (45) and detachably, in particular frictionally, lockable relative thereto in the required position.

10. A manually operated machine tool according to any of Claims 5 to 9, characterised in that the guide recess (47) of the circular arc guide (23) is located on the supporting part (46) mounted on the support plate (14) and consisting of two detachably connected shells (53, 54), the guide recess (47) lying between the shells (53, 54).

11. A manually operated machine tool according to any of Claims 4 to 10, characterised in that the supporting part (45) mounted on the operating unit (5) of at least one of the supporting points is mounted on the operating unit (5) with a first section (71) at the side of the cutting tool (8) if viewed in the direction of feed (19), in particular on the outside of a guard (7) covering the cutting tool (8), said first section (71) substantially extending in or against the direction of feed (19) and the second section carrying the guide recess (47) or forming the guide projection (48) being offset in front or behind the cutting tool or the guard (7) at right angles to the direction of feed (19) and intersecting the tool plane (18).

12. A manually operated machine tool according to Claim 11, characterised in that the third section (69) of the supporting part (45) mounted on the operating unit (5), which is provided with the guide projection (66) or the guide recess (64) for the traverse guide (63), is mounted on that end of the first section (71) of the supporting part (45) which is opposite to the second section (48, 72) and projects upwards, the first section (71) and the third section (69) lying in a common plane and the second section (48 or 72) lying in a plane at right angles thereto, the three sections being suitably designed integrally.

13. A manually operated machine tool according to any of Claims 3 to 12, characterised in that the circular arcs of the two circular arc guides (22, 23) have different radii of curvature, that of the second circular arc guide (23) suitably being smaller than that of the first circular arc guide (22).

14. A manually operated machine tool according to any of Claims 4 to 13, characterised in that the supporting part (46) located on the support plate (14) is mounted thereon capable of adjustment at right angles to the direction of feed (19).

15. A manually operated machine tool according to any of Claims 4 to 13, characterised in that the supporting part (46) located on the support plate (14) is mounted on that edge of the support plate (14) which extends vertically upwards, suitably standing on the surface of the support plate (14).

## Revendications

1. Machine-outil portative motorisée, à utiliser pour des opérations de tronçonnage, telles que scie circulaire portative, tronçonneuse par abrasion ou similaire, comportant une plaque d'application (14) qui par sa face inférieure, formant une surface d'application (15), s'applique contre un support se trouvant entre la pièce d'ouvrage (16) et la plaque d'application (14), en particulier un rail de guidage (75) à placer sur la pièce d'ouvrage (76) pour guider la machine dans son déplacement ou un plateau de table (76) portant la machine, en position inversée et qui porte, dans la région de sa face supérieure, une unité de travail (5) avec un outil de tronçonnage (8) en forme de disque avec plan d'outil perpendiculaire au plan de la surface d'application (15), l'unité de travail (5) étant reliée à la plaque d'application (14), de manière à pivoter autour d'un axe de pivotement (24) non matériel, parallèle à la direction d'avance (19) et de manière à pouvoir être fixée dans chaque position pivotée, en vue d'exécuter des coupes obliques ou en onglet, caractérisée en ce que l'axe de pivotement (24) est disposé, dans le cas où la plaque d'application (14) est appliquée contre le support (75, 76), à une distance de la surface d'application (15) de la plaque d'application (14), correspondant à l'épaisseur du support (75, 76) et est décalé, vu dans le sens d'avance (19), par rapport au plan médian d'outil (18), vers le bord longitudinal (82) du support qui lui fait face.

2. Machine-outil portative selon la revendication 1, caractérisée en ce que l'axe de pivotement s'étend dans le plan (84), parallèle au plan médian d'outil (18), de la face supérieure (85) d'outil tournée vers le support (75, 76).

3. Machine-outil portative selon la revendication 1 ou 2, qui est montée sur la plaque d'application (14), de manière à pivoter en deux points d'appui (20, 21) écartés l'un de l'autre dans le sens d'avance (19), caractérisée en ce que les deux points d'appui (20, 21) présentent chacun un guidage en arc de cercle (22, 23) avec point central situé sur l'axe de pivotement (24).

4. Machine-outil portative selon la revendication 3, caractérisée en ce qu'un élément formant palier, en prise avec l'autre élément formant palier, le long d'un arc de cercle, est fixé au-dessus de la surface d'application (15), sur la plaque d'application (14) et sur l'unité de travail (5), pour chaque point d'appui (20, 21), les deux éléments formant palier (31, 36, 45, 46) de chaque point d'appui (20, 21) présentent une longueur différente dans la direction de l'arc.

5. Machine-outil portative selon la revendication 4, caractérisée en ce que chaque élément formant palier (46) présente un creux de guidage (47) en forme de rainure, en arc de cercle et disposé dans un plan perpendiculaire au sens d'avance (19), creux dans lequel s'engage un relief de guidage (48) avantageusement en forme de doigt ou en arc de même courbure, de l'autre élément formant palier (45), le relief de guidage (48) et le creux de guidage (47) se déplaçant l'un par rapport à l'autre.

6. Machine-outil portative selon la revendication 4 ou 5, caractérisée en ce que les deux parties (47, 48) s'engageant l'une dans l'autre, des deux éléments formant paliers (45, 46) sont disposés, vus dans le sens d'avance (19) de la machine, devant et/ou derrière l'outil de tronçonnage (8) et, en particulier, à peu près verticalement au-dessus de l'axe de pivotement (24).

7. Machine-outil portative selon l'une quelconque des revendications 4 à 6 avec une unité de travail (5) réglable en hauteur par rapport à la plaque d'application (14), pour le réglage de la profondeur de coupe, caractérisée en ce que l'élément formant palier (45), placé sur l'unité de travail (5), de l'organe de guidage en arc de cercle (23), est fixé de manière amovible sur l'unité de travail (5), de manière que celle-ci soit réglable en hauteur, dans un plan parallèle au plan d'outil (18), lorsque l'élément formant palier (45) est détaché.

8. Machine-outil portative selon la revendication 7, caractérisée en ce que l'élément formant palier (45), placé sur l'unité de travail (5), fait partie en même temps d'un organe de guidage de déplacement (63) linéaire pour l'unité de travail (5) réglable en hauteur.

9. Machine-outil portative selon la revendication 8, caractérisée en ce que l'organe de guidage de déplacement (63) présente un évidement de guidage (64) rectiligne et s'étendant dans la direction de réglage en hauteur (65), disposé sur l'élément formant palier (45) associé à l'unité de travail (5) ou sur l'unité de travail (5), par exemple une rainure, une fente ou similaire dans laquelle s'engage un relief de guidage (66) disposé sur l'autre composant, l'unité de travail (5) étant déplaçable en continu par rapport à l'élément formant palier (45) et pouvant être fixée, de manière amovible et en particulier par force, dans les positions de déplacement souhaitées, par rapport à celui-ci.

10. Machine-outil portative selon l'une quelconque des revendications 5 à 9, caractérisée en ce que le creux de guidage (47) de l'organe de guidage en arc de cercle (23) est prévu sur l'élément formant palier (46), placé sur la plaque d'application (14) et formé par deux coques de palier (53, 54) reliées entre elles de manière amovible, le creux de guidage (47) s'étendant entre les deux coques de palier (53, 54).

11. Machine-outil portative selon l'une quelconque des revendications 4 à 10, caractérisée en ce que l'élément formant palier (45) d'au moins un point d'appui, est placé, par une première partie (71), à côté de l'outil de tronçonnage (8), vu dans le sens d'avance (19), sur l'unité de travail (5) et en particulier sur la face extérieure d'un capot de protection (7) recouvrant l'outil de tronçonnage (8), cette première partie (71) s'étendant essentiellement dans le sens d'avance (19) ou dans le sens contraire et sa deuxième partie portant (72) ou formant (48) le creux de guidage (47) ou le relief de guidage (48), étant coudée perpendiculairement au sens d'avance (19), devant ou derrière l'outil de tronçonnage ou le cas échéant le capot de protection (7) et coupant le plan d'outil (18).

12. Machine-outil portative selon la revendication 11, caractérisée en ce que la troisième partie (69), présentant le relief de guidage (66) ou le creux de guidage (64) pour le guidage en déplacement (63), de l'élément formant palier (45), placé sur l'unité de travail (5), est fixée à l'extrémité de la première partie (71) de l'élément formant palier (45), opposée à la deuxième partie (48, 72), et se détache ainsi vers le haut, la première partie (71) et la troisième partie (69) s'étendant dans un plan commun et la deuxième partie (48 ou 72) dans un plan perpendiculaire à celui-ci et les trois parties étant avantageusement réalisées d'une seule pièce.

13. Machine-outil portative selon l'une quelconque des revendications 3 à 12, caractérisée en ce que les rayons de courbure des arcs de cercle des deux organes de guidage en arc de cercle (22, 23), sont différents, l'arc de cercle du deuxième organe de guidage en arc de cercle (23) présentant avantageusement un rayon inférieur à celui du premier organe de guidage en arc de cercle (22).

14. Machine-outil portative selon l'une quelconque des revendications 4 à 13, caractérisée en ce que l'élément formant palier (46), disposé sur la plaque d'application (14), est fixé sur celle-ci, à angle droit par rapport au sens d'avance (19), de manière déplaçable.

15. Machine-outil portative selon l'une quelconque des revendications 4 à 13, caractérisée en ce que l'élément formant palier (46), disposé sur la plaque d'application (14), est fixé sur le bord (49) de la plaque d'application (14), faisant saillie vers le haut en angle droit, et dépasse avantageusement de la surface de la plaque d'application (14).

EP 0 246 417 B1

Fig. 1

Fig. 2

Fig. 3

Fig. 4

Fig. 5

*Fig.6*

Fig. 7